# EUROPÄISCHE PATENTANMELDUNG

(11) **EP 2 468 586 A2**
(43) Veröffentlichungstag der Anmeldung: **27.06.2012**
(21) Anmeldenummer: 11188821.0
(22) Anmeldetag: 11.11.2011
(51) Int. Cl.: B60S 1/04

(54) **Scheibenwisch-Gestängeeinrichtung, Herstellungsverfahren dafür sowie Scheibenwischvorrichtung und Wischeranlage**

(30) Priorität: 23.12.2010 DE 102010064128
(71) Anmelder: Robert Bosch GmbH, 70442 Stuttgart (DE)
(72) Erfinder: Gerstenberger, Jens, 77815 Buehl (DE); Kraus, Achim, 77815 Buehl (DE); Ramsayer, Reiner, 71701 Schwieberdingen (DE); Bechle, Andreas, 77815 Buehl (DE)

(57) **Zusammenfassung**

Die Erfindung betrifft eine Scheibenwisch-Gestängeeinrichtung (2) für eine Scheibenwischvorrichtung oder eine Wischeranlage eines Fortbewegungsmittels, insbesondere eines Kraftfahrzeugs, mit wenigstens zwei Wischerkomponenten (20, 30, 40), wobei die wenigstens zwei Wischerkomponenten (20, 30, 40) der Scheibenwisch-Gestängeeinrichtung (2) reibschlüssig mittels einer Magnetpulsumformung miteinander verpresst sind.

Ferner betrifft die Erfindung ein Verfahren zum Herstellen einer Scheibenwisch-Gestängeeinrichtung (2) für eine Scheibenwischvorrichtung oder eine Wischeranlage eines Fortbewegungsmittels, insbesondere eines Kraftfahrzeugs, mit wenigstens zwei Wischerkomponenten (20, 30, 40), wobei die wenigstens zwei Wischerkomponenten (20, 30, 40) der Scheibenwisch-Gestängeeinrichtung (2) reibschlüssig durch Magnetpulsumformen miteinander verpresst werden.

Des Weiteren betrifft die Erfindung eine Scheibenwischvorrichtung oder eine Wischeranlage (1) für ein Fortbewegungsmittel, insbesondere für eine Windschutzscheibe eines Kraftfahrzeugs, wobei eine Scheibenwisch-Gestängeeinrichtung (2) der Scheibenwischvorrichtung bzw. der Wischeranlage (1) erfindungsgemäß ausgebildet oder erfindungsgemäß hergestellt ist.

## Beschreibung

Die Erfindung betrifft eine Scheibenwisch-Gestängeeinrichtung und ein Verfahren zum Herstellen einer Scheibenwisch-Gestängeeinrichtung, für eine Scheibenwischvorrichtung oder eine Wischeranlage eines Fortbewegungsmittels, insbesondere eines Kraftfahrzeugs. Ferner betrifft die Erfindung eine Scheibenwischvorrichtung oder eine Wischeranlage insbesondere für eine Windschutzscheibe eines Kraftfahrzeugs, mit einer erfindungsgemäßen Scheibenwisch-Gestängeeinrichtung bzw. mit einer erfindungsgemäß hergestellten Scheibenwisch-Gestängeeinrichtung.

### Stand der Technik

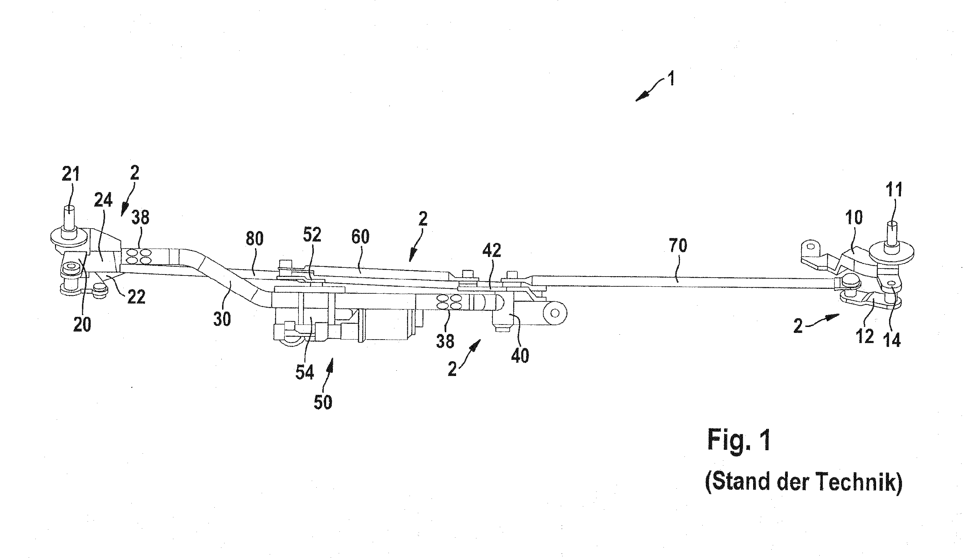

Eine Vielzahl von Gestängeeinrichtungen für Scheibenwischvorrichtungen oder deren Wischeranlagen besitzen ein Trägerrohr für eine Lagereinrichtung, ein Übertragungsgestänge und/oder einen Antriebsmotor. Hierbei können die Lagereinrichtungen und ein Gehäuse des Antriebsmotors bevorzugt aus einem Aluminium-Werkstoff und das Trägerrohr meist aus einem Stahl-Werkstoff hergestellt sein. Eine mechanische Verbindung innerhalb der Scheibenwisch-Gestängeeinrichtung zwischen dem Trägerrohr und z. B. einem Montagezapfen beispielsweise einer Lagereinrichtung erfolgt im Stand der Technik mittels einer mechanischen Crimpung (siehe hierzu auch die Fig. 1), wobei das Trägerrohr auf/in im Montagezapfen der Lagereinrichtung vorgesehene Crimpkerben gecrimpt wird. Hierbei bildet sich eine Formschlussverbindung zwischen dem Trägerrohr und dem Montagezapfen aus.

Solche Crimpkerben benötigen enge Toleranzen, um später eine ordnungsgemäße Crimpung sicherzustellen und schwächen darüber hinaus den Montagezapfen, da diese tief in den Montagezapfen hineingehend vorgesehen sein müssen. Die engen Toleranzen der Crimpkerben machen die Crimpung vergleichsweise teuer. Ferner sind die beim Crimpen auftretenden mechanischen Kräfte sehr hoch, was negative Auswirkungen auf eine zurückbleibende Verformung in den Wischerkomponenten und eine Größe der verwendeten Crimpwerkzeuge hat. Aufgrund einer hohen Varianz der unterschiedlichen Applikationen bedarf es dafür zudem einer komplexen mehrachseigen Maschinentechnik.

### Aufgabenstellung

Es ist eine Aufgabe der Erfindung, eine verbesserte Gestängeeinrichtung für eine Scheibenwischvorrichtung bzw. eine Wischeranlage eines Fortbewegungsmittels, insbesondere eines Kraftfahrzeugs, anzugeben. Eine mechanische Verbindung zwischen zwei Wischerkomponenten der Gestängeeinrichtung soll dabei einfach aufgebaut sein und bei kleinen Abmessungen robust und kostengünstig eingerichtet werden können. Hierbei soll gemäß der Erfindung auf ein teures mechanisches Verfahren, d. h. ein weggesteuertes Verfahren, wie z. B. ein mechanisches Crimpverfahren, verzichtet werden können. Dies betrifft insbesondere die mechanische Verbindung zwischen einem Trägerrohr und einer Lagereinrichtung und/oder einem Antriebsmotor der Scheibenwischvorrichtung bzw. der Wischeranlage.

### Offenbarung der Erfindung

Die Aufgabe der Erfindung wird mittels einer Scheibenwisch-Gestängeeinrichtung und durch ein Verfahren zum Herstellen einer Scheibenwisch-Gestängeeinrichtung für eine Scheibenwischvorrichtung oder eine Wischeranlage eines Fortbewegungsmittels, insbesondere eines Kraftfahrzeugs, gemäß Anspruch 1 bzw. Anspruch 2; und eine Scheibenwischvorrichtung oder eine Wischeranlage, insbesondere für eine Windschutzscheibe eines Kraftfahrzeugs, gemäß Anspruch 10 gelöst. Vorteilhafte Weiterbildungen der Erfindung ergeben sich aus den abhängigen Ansprüchen.

Die erfindungsgemäße Scheibenwisch-Gestängeeinrichtung weist wenigstens zwei Wischerkomponenten auf, wobei die wenigstens zwei Wischerkomponenten reib- oder kraftschlüssig mittels einer Magnetpulsumformung miteinander verpresst bzw. aneinander festgelegt sind. Bei dem erfindungsgemäßen Verfahren werden die wenigstens zwei Wischerkomponenten der Scheibenwisch-Gestängeeinrichtung ebenfalls reib- oder kraftschlüssig durch Magnetpulsumformen bzw. durch ein Verfahren zum Magnetpulsumformen miteinander verpresst bzw. aneinander festgelegt.

Hierbei kann eine Wischerkomponente eine Lagereinrichtung, insbesondere ein Wischerlager, eine Schubstangen-Lagereinrichtung; ein Trägerrohr; ein elektrischer Antriebsmotor, ggf. mit einem Getriebe; ein Gehäuse oder eine Montagevorrichtung, insbesondere eine Montagehülse sein. Aber auch andere Wischerkomponenten sind gemäß der Erfindung anwendbar. So kann z. B. auch eine Schubstange oder eine Koppelschwinge angewendet werden, falls dies eine Konstruktion der Scheibenwisch-Gestängeeinrichtung erlaubt.

Gemäß der Erfindung werden wenigstens zwei Wischerkomponenten durch Magnetpulsumformen miteinander reib- und/oder formschlüssig verbunden. Es kann also auf ein teures mechanisches Verfahren, wie z. B. ein weggesteuertes Crimpverfahren, verzichtet werden. Stattdessen wird ein elektrisches bzw. stromgesteuertes Umformverfahren angewendet, um die wenigstens zwei Wischerkomponenten aneinander dauerhaft festzulegen. Die mechanische Verbindung kann dabei kraftlos auf das Gestänge abseits der Verbindungsstelle der beiden Wischerkomponenten und örtlich flexibel, auch bei größeren Toleranzen, eingerichtet werden. Dies minimiert eine Komplexität einer Prozessführung signifikant, wobei auf die aufwändige Technik der Crimpmaschinen verzichtet werden kann.

Ein Verbindungsbereich zweier Wischerkomponenten kann dabei im Wesentlichen eine zylindrische, eine quaderförmige oder eine konusartige Form aufweisen. Andere Formen sind dabei natürlich ebenfalls anwendbar. Hierbei sind bevorzugt zwei Wischerkomponenten mit ihren jeweiligen Verbindungsabschnitten ineinander gesteckt. In Ausführungsformen der Erfindung ist die eine Wischerkomponente in ihrem Verbindungsabschnitt rohrförmig und die andere Wischerkomponente in ihrem Verbindungsabschnitt zapfen- oder ebenfalls rohrförmig ausgebildet.

Gemäß der Erfindung können zwei Wischerkomponenten aus unterschiedlichen Werkstoffen aufgebaut sein, wobei eine einzelne Wischerkomponente einen oder mehr Werkstoffe aufweisen kann. So kann die eine Wischerkomponente einen Metall- bzw. Leichtmetall-Werkstoff, insbesondere einen Aluminium-Werkstoff, und/oder die andere Wischerkomponente einen Metall-Werkstoff, insbesondere einen Stahl-Werkstoff oder ebenfalls einen Leichtmetall-Werkstoff, aufweisen. Eine Werkstoffpaarung Stahl/Stahl ist natürlich ebenfalls anwendbar. Ferner kann eine Wischerkomponente einen Kunststoff-Werkstoff aufweisen, wobei diese Wischerkomponente mit ihrem Verbindungsabschnitt dann bevorzugt in den betreffenden anderen Verbindungsabschnitt der zweiten Wischerkomponente eingesteckt ist. Durch einen Einsatz eines Metalltreibers kann eine solche Kunststoffkomponente durch das Verfahren zum Magnetpulsumformen auch beschleunigt werden und z. B. außen an einem betreffenden Gestänge vorgesehen sein.

Das Magnetpulsumformen erlaubt es einem Hersteller ein Design der Scheibenwisch-Gestängeeinrichtung derart zu wählen, dass es möglich ist, eine Umformverbindung herzustellen, die unterschiedliche Materialien besitzt. Dadurch können leichtere und hochfeste Materialkombinationen gewählt werden. Beim Magnetpulsumformen werden oberflächennahe Bereiche des oder der Fügepartner im Makro- und auch im Mikrogefüge nicht verändert. Bei mechanischen Umformverfahren entstehen hierbei üblicherweise Mikrorisse, mechanische Spannungen und Korrosion. Die Verbindung der Wischerkomponenten kann dabei einfach aufgebaut sein und bei kleinen Abmessungen robust und kostengünstig eingerichtet werden.

### Kurzbeschreibung der Figuren

Die Erfindung wird im Folgenden anhand von Ausführungsbeispielen unter Bezugnahme auf die beigefügte Zeichnung näher erläutert. In den schematischen Figuren der Zeichnung zeigen:
- Fig. 1: in einer perspektivischen Darstellung eine Wischeranlage für eine Scheibenwischvorrichtung gemäß dem Stand der Technik, für eine Windschutzscheibe eines Kraftfahrzeugs;
- Fig. 2: in einer zweidimensionalen seitlichen Schnittdarstellung zwei Wischerkomponenten zeitlich vor bzw. bei einem erfindungsgemäßen Zusammenfügen;
- Fig. 3: eine zur Fig. 2 analoge Darstellung einer erfindungsgemäßen Scheibenwisch-Gestängeeinrichtung zeitlich nach dem Fügen der zwei Wischerkomponenten;
- Fig. 4: ebenfalls in einer zweidimensionalen, seitlichen Schnittansicht zwei erfindungsgemäß zusammengefügte Wischerkomponenten; und
- Fig. 5: in einer zur Fig. 4 analogen Darstellung drei erfindungsgemäß zusammengefügte Wischerkomponenten.

### Ausführungsformen der Erfindung

Eine in Fig. 1 dargestellte Wischeranlage 1 für eine Scheibenwischvorrichtung gemäß dem Stand der Technik für ein Kraftfahrzeug umfasst eine Mehrzahl von Scheibenwisch-Gestängeeinrichtungen 2, nachfolgend als Gestängeeinrichtungen 2 bezeichnet, wobei in jeder Gestängeeinrichtung 2 wenigstens zwei Wischerkomponenten 10, 20, 30, 40, 50, 60, 70, 80 der Wischeranlage 1 zusammengefasst sind. Eine bevorzugt zentrale Wischerkomponente 30 der Wischeranlage 1 ist ein den Gegebenheiten des betreffenden Kraftfahrzeugs entsprechend angepasstes Trägerrohr 30, mittels welchem die anderen Wischerkomponenten 10, 20, 40, 50, 60, 70, 80 wenigstens teilweise gehaltert bzw. an dieses mechanisch angebunden sind.

Im vorliegenden Ausführungsbeispiel ist an einem Längsendabschnitt des Trägerrohrs 30 eine Lagereinrichtung 20, insbesondere ein innerhalb des Kraftfahrzeugs festlegbares Wischerlager 20, und an einem diesen gegenüberliegenden Längsendabschnitt eine Lagereinrichtung 40, insbesondere eine innerhalb des Kraftfahrzeugs festlegbare Schubstangen-Lagereinrichtung 40, festgelegt. In einem Mittenabschnitt des Trägerrohrs 30 ist ein elektrischer Antriebsmotor 50 an diesen mittels eines Halters geklemmt. Eine Lagereinrichtung 10, die bevorzugt ebenfalls als ein innerhalb des Kraftfahrzeugs festlegbares Wischerlager 10 ausgebildet ist, ist der Lagereinrichtung 20 an einem gegenüberliegenden Ende der Wischeranlage 1 vorgesehen.

Im vorliegenden Ausführungsbeispiel ist die Lagereinrichtung 10 nicht direkt mit dem Trägerrohr 30 verbunden, sondern wird ausschließlich an einer Karosserie des Kraftfahrzeugs festgelegt. Andere Ausführungsformen, z. B. eine solche bei der die Lagereinrichtung 10 am Träger 30 festlegbar ist, sind natürlich anwendbar. Hierbei können insbesondere die beiden Wischerlager 10, 20 über das Trägerrohr 30 miteinander mechanisch fest verbunden sein. D. h. es kann wenigstens eine, aber auch zwei oder sogar drei der Lagereinrichtungen 10, 20, 40 direkt an der Karosserie des Kraftfahrzeugs festgelegt werden. Das Trägerrohr 30 übernimmt dementsprechend dann andere mechanische Verbindungsaufgaben oder ist in manchen Ausführungsformen obsolet.

Der ggf. mit einem Getriebe versehene, am Trägerrohr 30 montierte elektrische Antriebsmotor 50 treibt in seinem Betrieb eine Abtriebskurbel 52 an, welche über eine Schubstange 60 eine auf der Schubstangen-Lagereinrichtung 40 dreh- oder schwenkbar gelagerte Koppelschwinge 42 zu einer pendelnden Bewegung antreibt. Auf der Koppelschwinge 42 sind zwei Schubstangen 70, 80 montiert, die in voneinander wegweisende Richtungen jeweils eine Antriebsschwinge 12, 22 einer Wischerwelle 11, 21 des betreffenden Wischerlagers 10, 20 pendelnd antreiben. Die Schubstangen 60, 70, 80 zusammen mit der Abtriebskurbel 52, der Koppelschwinge 42 und den Antriebsschwingen 12, 22 bilden dabei ein Übertragungsgestänge für die Wischeranlage 1. Auf der jeweiligen Wischerwelle 10, 20 ist ein Wischerblatt (in der Zeichnung nicht dargestellt) montierbar.

Eine mechanische Verbindung der Lagereinrichtungen 20, 40 mit dem Trägerrohr 30 erfolgt im Stand der Technik mittels jeweils einer weggesteuerten mechanischen Crimpung 38 in einem betreffenden Crimpabschnitt des Trägerrohrs 30. Hierbei wird das Trägerrohr 30 mit seinem Crimpabschnitt auf einen betreffenden Montagezapfen der Lagereinrichtung 20, 40 gecrimpt. Für eine Montage des Trägerrohrs 30 weist der betreffenden Montagezapfen einen Crimpabschnitt auf, der in den Montagezapfen hineingehende Crimpkerben besitzt. Ist das Trägerrohr 30 mit seinem betreffenden Längsendabschnitt auf den betreffenden Montagezapfen aufgesteckt, so werden mittels eines Crimpwerkzeugs (in der Zeichnung nicht dargestellt) Bereiche des Crimpabschnitts des Trägerrohrs 30 in die Crimpkerben des betreffenden Montagezapfens unter einer plastischen Verformung dieser Bereiche hineingequetscht.

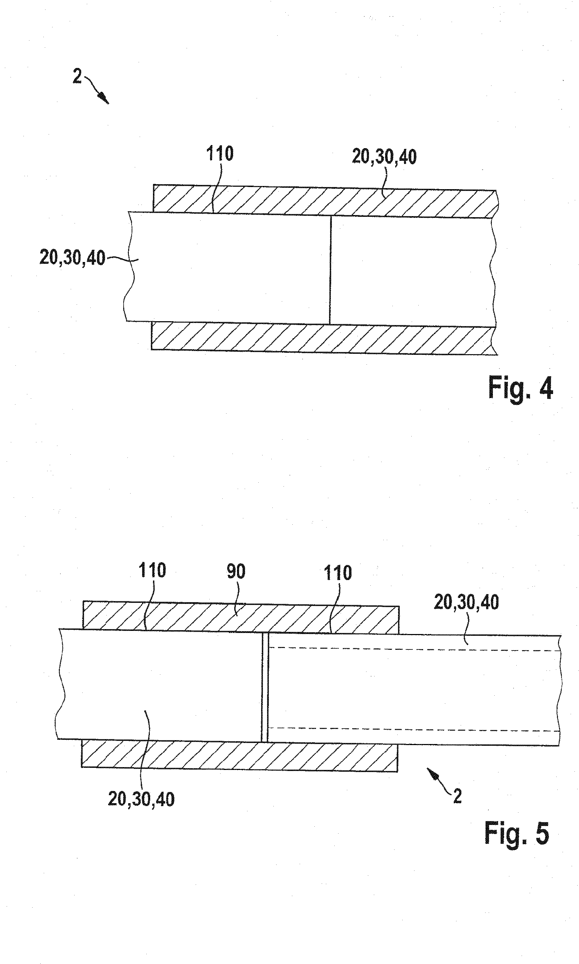

Gemäß der Erfindung soll eine alternative Verbindung zweier Wischerkomponenten 10, 20, 30, 40, 50, 60, 70, 80, 90 (siehe Fig. 5) - also innerhalb einer Gestängeeinrichtung 2 - der Wischeranlage 1, insbesondere des Trägerrohrs 30 mit einer Lagereinrichtung 10, 20, 40 bzw. dessen Gehäuse 14, 24, und/oder einem elektrischen Antriebsmotor 50 bzw. dessen Gehäuse 54, zur Verfügung gestellt werden. Ein direktes Schweißverfahren, wie ein z. B. Widerstands-Schweißverfahren, eignet sich hierfür nicht, da z. B. das Trägerrohr 30 meist aus einem Stahl-Werkstoff und die Lagereinrichtung 10, 20, 40 bzw. dessen Gehäuse 14, 24 oder ein entsprechender Montageabschnitt des Antriebsmotors 50 bzw. dessen Gehäuse 54 aus einem Aluminium-Werkstoff gefertigt ist und sich diese beiden Materialien derart nicht verschweißen lassen. Darüber hinaus ist eine zu verschweißende Fläche bei einer Steckverbindung zwischen dem Trägerrohr 30 und der Lagereinrichtung 10, 20, 40 bzw. dem Antriebsmotor 50 zu klein. Ein indirektes Verfahren, wie z. B. Hartlöten eignet sich ebenfalls nicht, da das Hartlot einen deutlich geringeren Schmelzpunkt aufweisen muss als die beteiligten Werkstoffe, was zu einer reduzierten Festigkeit der Verbindung führt. Darüber hinaus ist die Anwendung dieses Verfahrens auf vorliegenden Gegenstand zu kostenintensiv.

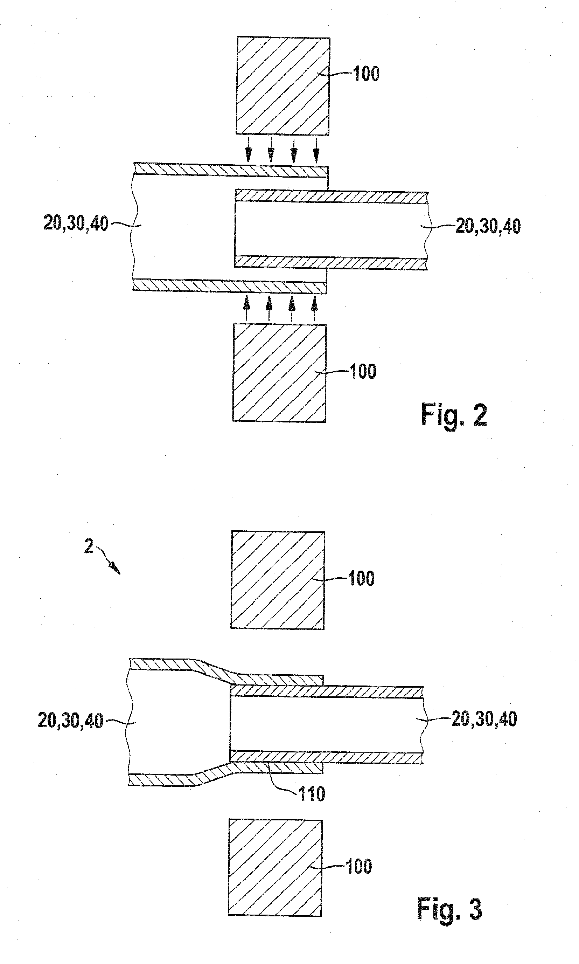

Diese Nachteile werden mittels einer reibschlüssigen bzw. kraftschlüssigen mechanischen Verbindung vermieden, die mittels einer Magnetpulsumformung herstellbar ist bzw. durch ein Verfahren zum Magnetpulsumformen hergestellt wird. Ein für dieses Verfahren zur Verfügung stehender Verformbereich ist vergleichsweise groß, wodurch eine stabile Pressverbindung 110 entsteht. Der Herstellungsprozess ist schnell und kostengünstig, und mit einer guten mechanischen Stabilität der beteiligten Wischerkomponenten 10, 20, 30, 40, 50, 60, 70, 80, 90 sowie der stabilen Pressverbindung 110 ergibt sich eine belastbare, stabile und dauerfeste mechanische Reib- bzw. Kraftschlussverbindung 110. Ein solcher reibschlüssiger Verbindungsbereich 110 ist in den Fig. 3 bis 5 dargestellt; siehe weiter unten.

Bei der erfindungsgemäßen Anwendung des Verfahrens zum Magnetpulsumformen wird eine betreffende Wandung einer Wischerkomponente 10, 20, 30, 40, 50, 60, 70, 80, 90 oder ein Treiber, radial nach innen oder radial nach außen auf einen Verbindungsabschnitt der anderen Wischerkomponente 10, 20, 30, 40, 50, 60, 70, 80, 90 derart beschleunigt, dass sich in einem gemeinsamen Bereich unter einer plastischen Umformung der beschleunigten Wandung der Wischerkomponente 10, 20, 30, 40, 50, 60, 70, 80, 90, die Reibschlussverbindung 110 zwischen den betreffenden Werkstoffen ausbildet. Durch die entstehende, im Wesentlichen flächige Verbindung können auftretende mechanische Kräfte sehr gut übertragen werden. Dies gilt für eine Axial-, eine Biege-, eine Torsions- oder auch eine zusammengesetzte mechanische Beanspruchung. Ein Einrichten einer solchen Reibschlussverbindung 110 wird anhand der Fig. 2 näher erläutert.

Die folgenden Ausführungen beziehen sich nur noch auf Wischerkomponenten 20, 30, 40, 90. Diese Ausführungen sind jedoch analog auf die Wischerkomponenten 10, 50, 60, 70, 80 oder auch auf andere, z. B. in der Zeichnung nicht dargestellte Wischerkomponenten anwendbar. Gemäß der Erfindung - siehe Fig. 2 und 3 - werden zwei Wischerkomponenten 20, 30, 40; 20, 30, 40 mit ihren betreffenden Verbindungsabschnitten, also deren Längsendabschnitten, im Wesentlichen koaxial ineinander gesteckt, wobei diese Anordnung innerhalb einer Magnetpuls-Umformspule 100, die vorliegend als eine Kompressionsspule 100 ausgebildet ist, eingerichtet wird. Nach einer kurzeitigen Bestromung der Magnetpuls-Umformspule 100 mit Wechselstrom, induziert ein Wechselmagnetfeld der Magnetpuls-Umformspule 100 in der äußeren Wischerkomponente 20, 30, 40 bzw. deren Verbindungsabschnitt einen gegenläufigen Wechselstrom, der wiederum ein dem ersten Wechselmagnetfeld entgegengesetztes Wechselmagnetfeld induziert.

Durch die beiden sich abstoßenden Wechselmagnetfelder ergibt sich mit der festgelegten Magnetpuls-Umformspule 100 eine radial nach innen gerichtete Kraft, welche den Verbindungsabschnitt der äußeren Wischerkomponente 20, 30, 40 sehr schnell auf den Verbindungsabschnitt der inneren Wischerkomponente 20, 30, 40 beschleunigt. Hierbei verformt sich der Verbindungsabschnitt der äußeren Wischerkomponente 20, 30, 40 derart plastisch, dass er einen dauerhaften Pressverbund (Reibschlussverbindung 110) mit dem Verbindungsabschnitt der inneren Wischerkomponente 20, 30, 40 eingeht, was in der Fig. 3 dargestellt ist. Die Reibschlussverbindung 110 hat dabei bevorzugt im Wesentlichen die Form eines Quaders, eines Konus oder eines Zylinders, welcher eine kreis- oder auch eine ellipsenförmige Grundfläche besitzen kann.

Hierbei kann der Verbindungsabschnitt der inneren Wischerkomponente 20, 30, 40 ein Montagezapfen, der z. B. aus einem Vollmaterial besteht, oder auch ein Rohrabschnitt sein. Bevorzugt ist ein Werkstoff dieses Verbindungsabschnitts ein Metall-Werkstoff, wie z. B. ein Leichtmetall- oder ein Stahl-Werkstoff. Ferner kann, insbesondere bei der Anordnung nach Fig. 2, der Verbindungsabschnitt der inneren Wischerkomponente 20, 30, 40 einen Kunststoff-Werkstoff aufweisen oder auch aus einem Verbund-Werkstoff aufgebaut sein. Ferner ist der Verbindungsabschnitt der äußeren Wischerkomponente 20, 30, 40 bevorzugt rohrförmig ausgestaltet, wobei der Verbindungsabschnitt einen Metall-Werkstoff, wie z. B. einen Leichtmetall- oder einen Stahl-Werkstoff, aufweist. Bei Verwendung eines Treibers (siehe unten) kann bei einer Konfiguration nach den Fig. 2 und 3 der Verbindungsabschnitt der äußeren Wischerkomponente 20, 30, 40 auch einen elektrisch nicht leitenden Werkstoff, wie z. B. einen Kunststoff-Werkstoff, oder einen elektrisch schlecht leitenden Werkstoff aufweisen.

Mit der Verwendung einer Expansionsspule (in der Zeichnung nicht dargestellt) kann das Vorgehen natürlich auch kinematisch umgekehrt werden, wobei der innenliegende Verbindungsabschnitt der betreffenden Wischerkomponente mittels der darin angeordneten Expansionsspule aufgeweitet wird und entsprechend ein Reib- bzw. Kraftschluss mit der äußeren Wischerkomponente eingerichtet wird. Ferner kann, insbesondere bei elektrisch vergleichsweise schlecht leitenden Werkstoffen ein äußerer (Kompressionsspule) oder innerer Treiber (Expansionsspule) aus einem elektrisch vergleichsweise gut leitenden Werkstoff verwendet werden. Dies ist z. B. auch bei der Verwendung einer Wischerkomponente vorteilhaft, die Kunststoff aufweist. In gewisser Weise ist die als eine Montagehülse 90 ausgebildete Wischerkomponente 90 ein solcher Treiber (in der Zeichnung nicht dargestellt, siehe unten zu Fig. 5).

Die Fig. 4 zeigt zwei Wischerkomponenten 20, 30, 40; 20, 30, 40, wobei ein Verbindungsabschnitt einer inneren Wischerkomponente 20, 30, 40 in einen Verbindungsabschnitt einer äußeren Wischerkomponente 20, 30, 40 eingesteckt ist. Die beiden Wischerkomponenten 20, 30, 40; 20, 30, 40 sind über die erfindungsgemäße Reibschlussverbindung 110 aneinander festgelegt, wodurch eine Zwei-Wischerkomponenten-Verbindung entstanden ist. Die zueinander korrespondierenden Verbindungsabschnitte der Wischerkomponenten 20, 30, 40; 20, 30, 40 können dabei wiederum als ein Montagezapfen und ein Rohrabschnitt, oder jeweils als ein Rohrabschnitt (siehe Fig. 3) ausgebildet sein. In der Fig. 4 ist jedoch links ein Montagezapfen und rechts bzw. radial darüber ein Rohrabschnitt der betreffenden Wischerkomponente 20, 30, 40 dargestellt.

Die Fig. 5 zeigt eine weitere Ausführungsform der Erfindung, wobei zwei Wischerkomponenten 20, 30, 40; 20, 30, 40 mithilfe einer dritten Wischerkomponente 90, der Montagehülse 90, aneinander festgelegt sind. Hierbei entsteht eine Drei-Wischerkomponenten-Verbindung. Die innerhalb der Montagehülse 90 angeordneten Verbindungsabschnitte der Wischerkomponenten 20, 30, 40; 20, 30, 40 können dabei wiederum als (ein) Montagezapfen und/oder (ein) Rohrabschnitt/e ausgebildet sein. Dabei ist in der Fig. 5 links ein Montagezapfen und rechts ein Rohrabschnitt der betreffenden Wischerkomponente 20, 30, 40 dargestellt. Bevorzugt ist dabei die Montagehülse 90 als ein vergleichsweise kurzes Rohrstück ausgebildet, innerhalb welchem die beiden inneren Verbindungsabschnitte der Wischerkomponenten 20, 30, 40; 20, 30, 40 vorgesehen sind.

Gemäß der Erfindung stellt sich auch eine Formschlussverbindung ein, die jedoch in Alleinstellung nicht ausreicht die beiden Wischerkomponenten 20, 30, 40; 20, 30, 40 aneinander festzulegen. Zu dem Formschluss muss noch der Reib- bzw. Kraftschluss hinzukommen, damit sich die beiden Wischerkomponenten 20, 30, 40; 20, 30, 40 auch wirklich aneinander festlegen lassen. Eine kraftschlüssige Verbindung setzt eine Normalkraft auf die miteinander verbundenen Wischerkomponenten 20, 30, 40; 20, 30, 40 voraus. Ihre gegenseitige Verschiebung ist solange verhindert, bis eine durch die Haftreibung aus dem Pressverbund der beiden Wischerkomponenten 20, 30, 40; 20, 30, 40 bewirkte Gegenkraft nicht überschritten wird. Der Reib- bzw. Kraftschluss geht verloren und die beiden Wischerkomponenten 20, 30, 40; 20, 30, 40 gleiten gegeneinander ab, wenn z. B. bei kreissymmetrischen Querschnitten eine tangential wirkende Kraft größer als die Haftreibungskraft ist. Analoges trifft auf eine Normalkraft auf eine bzw. beide Wischerkomponenten 20, 30, 40; 20, 30, 40 zu.

Das Verfahren des Magnetpulsumformens bzw. das Magnetpulsumformen ist ein berührungsloses Umform- bzw. Fügeverfahren, mit welchem eine partielle Umformung bzw. Durchmesserreduzierung (Kompressionsspule) oder -erhöhung (Expansionsspule) möglich ist. Durch eine Geometrieänderung eines Fügepartners ist es möglich, einen flächigen Reib- bzw. Kraftschluss zu erzielen, wobei ein höheres Grenzumformvermögen als mit nicht berührungslosen mechanischen Verfahren erzielbar ist. Ferner ist das Verfahren des Magnetpulsumformens bzw. das Magnetpulsumformen ist ferner unter den Namen Elektromagnetische Puls Technologie (EMPT), Magnetumformung, Elektromagnetische Umformung (EMU) oder auch als Magnetimpulsumformung bekannt.

## Patentansprüche

1. Scheibenwisch-Gestängeeinrichtung für eine Scheibenwischvorrichtung oder eine Wischeranlage (1) eines Fortbewegungsmittels, insbesondere eines Kraftfahrzeugs, mit wenigstens zwei Wischerkomponenten (20, 30, 40, 90), **dadurch gekennzeichnet,**
**dass** die wenigstens zwei Wischerkomponenten (20, 30, 40, 90) der Scheibenwisch-Gestängeeinrichtung (2) reibschlüssig mittels einer Magnetpulsumformung miteinander verpresst sind.

2. Verfahren zum Herstellen einer Scheibenwisch-Gestängeeinrichtung für eine Scheibenwischvorrichtung oder eine Wischeranlage (1) eines Fortbewegungsmittels, insbesondere eines Kraftfahrzeugs, mit wenigstens zwei Wischerkomponenten (20, 30, 40, 90), **dadurch gekennzeichnet,**
**dass** die wenigstens zwei Wischerkomponenten (20, 30, 40, 90) der Scheibenwisch-Gestängeeinrichtung (2) reibschlüssig durch Magnetpulsumformen miteinander verpresst werden.

3. Scheibenwisch-Gestängeeinrichtung oder Herstellungsverfahren gemäß Anspruch 1 oder 2, **dadurch gekennzeichnet, dass** ein Verbindungsbereich (110) zweier Wischerkomponenten (20, 30, 40, 90) der Scheibenwisch-Gestängeeinrichtung (2) im Wesentlichen eine zylindrische, eine quaderförmige oder eine konusartige Form aufweist.

4. Scheibenwisch-Gestängeeinrichtung oder Herstellungsverfahren gemäß einem der Ansprüche 1 bis 3, **dadurch gekennzeichnet, dass** zwei Wischerkomponenten (20, 30, 40, 90) mit ihren jeweiligen Verbindungsabschnitten ineinander gesteckt sind.

5. Scheibenwisch-Gestängeeinrichtung oder Herstellungsverfahren gemäß einem der Ansprüche 1 bis 4, **dadurch gekennzeichnet, dass** die eine Wischerkomponente (20, 30, 40, 90) in ihrem Verbindungsabschnitt rohrförmig und die zweite Wischerkomponente (20, 30, 40, 90) in ihrem Verbindungsabschnitt zapfen- oder ebenfalls rohrförmig ausgebildet ist.

6. Scheibenwisch-Gestängeeinrichtung oder Herstellungsverfahren gemäß einem der Ansprüche 1 bis 5, **dadurch gekennzeichnet, dass** zwei Wischerkomponenten (20, 30, 40, 90) aus unterschiedlichen Werkstoffen aufgebaut sind, wobei eine einzelne Wischerkomponente (20, 30, 40, 90) aus einem oder mehr Werkstoffen aufgebaut sein kann.

7. Scheibenwisch-Gestängeeinrichtung oder Herstellungsverfahren gemäß einem der Ansprüche 1 bis 6, **dadurch gekennzeichnet, dass** die eine Wischerkomponente (20, 30, 40, 90) einen Leichtmetall-Werkstoff, insbesondere einen Aluminium-Werkstoff, und/oder die zweite Wischerkomponente (20, 30, 40, 90) einen Metall-Werkstoff, insbesondere einen Stahl-Werkstoff oder Leichtmetall-Werkstoff, aufweist.

8. Scheibenwisch-Gestängeeinrichtung oder Herstellungsverfahren gemäß einem der Ansprüche 1 bis 7, **dadurch gekennzeichnet, dass** eine Wischerkomponente (20, 40) einen Kunststoff-Werkstoff aufweist, wobei diese Wischerkomponente (20, 40) mit ihren Verbindungsabschnitt in den betreffenden anderen Verbindungsabschnitt der zweiten Wischerkomponente (30, 90) eingesteckt ist.

9. Scheibenwisch-Gestängeeinrichtung oder Herstellungsverfahren gemäß einem der Ansprüche 1 bis 8, **dadurch gekennzeichnet, dass** die Wischerkomponente (20, 30, 40, 90) eine Lagereinrichtung (20, 40), insbesondere ein Wischerlager (20), eine Schubstangen-Lagereinrichtung (40); ein Trägerrohr (30); ein elektrischer Antriebsmotor, ggf. mit einem Getriebe; ein Gehäuse oder eine Montagevorrichtung (90), insbesondere eine Montagehülse (90) ist.

10. Scheibenwischvorrichtung oder Wischeranlage für ein Fortbewegungsmittel, insbesondere für eine Windschutzscheibe eines Kraftfahrzeugs, **dadurch gekennzeichnet, dass** eine Scheibenwisch-Gestängeeinrichtung (2) der Scheibenwischvorrichtung bzw. der Wischeranlage (1) nach einem der Ansprüche 1 bis 9 ausgebildet oder nach einem der Ansprüche 2 bis 9 hergestellt ist.
